# EUROPEAN PATENT APPLICATION

(11) **EP 4 800 720 A1**
(43) Date of publication of application: **02.09.2026**
(21) Application number: 24882422.9
(22) Date of filing: 23.10.2024
(51) Int. Cl.: H01B 5/16, H01M 10/052, H01M 10/0562, H01B 1/06, H01B 1/10, H01B 1/20

(54) **SOLID ELECTROLYTE SHEET**

(30) Priority: 27.10.2023 JP 2023185071
(71) Applicant: Mitsui Kinzoku Company, Limited, Tokyo 141-8584 (JP)
(72) Inventor: CHIKUMOTO, Takashi, Ageo-shi, Saitama 362-0021 (JP); KOBAYASHI, Yasutaka, Ageo-shi, Saitama 362-0021 (JP); OGATA, Yoichiro, Ageo-shi, Saitama 362-0021 (JP)
(74) Representative: Novagraaf Technologies
(86) International application number: PCT/JP2024/037801
(87) International publication number: WO 2025/089311

(57) **Abstract**

A solid electrolyte sheet contains a solid electrolyte and a binder. The solid electrolyte sheet has a thickness of 90 µm or less. The content of the binder in the solid electrolyte sheet is more than 1 mass%. The solid electrolyte contains a crystalline phase having an argyrodite-type crystal structure. The solid electrolyte sheet does not include a porous support. The solid electrolyte sheet has self-supporting property. It is preferable that the content of the binder is 20 mass% or less. It is also preferable that the tensile strength of the solid electrolyte sheet is 2.0 N/mm² or more.

## Description

### Technical Field

The present invention relates to a solid electrolyte sheet.

### Background Art

In recent years, secondary batteries have garnered attention as part of efforts to prevent global warming by reducing CO₂ emissions. In particular, solid-state batteries are expected to be put into practical use as batteries that are safe and have a high energy density. When producing a solid-state battery, a solid electrolyte sheet mainly containing solid electrolyte powder may be used as one of the members constituting the solid-state battery. For example, Patent Literature 1 describes a solid electrolyte sheet in which solid electrolyte powder is supported on a support made of nonwoven fabric, the solid electrolyte sheet having a binder content of less than 0.5 mass% and a thickness of 100 µm or less.

However, when a solid electrolyte sheet includes a support, the support may inhibit adhesion between solid electrolyte particles, making it difficult to improve the conductivity. In addition, current may concentrate at specific locations within the solid electrolyte sheet, which can be a factor causing degradation of the battery. Therefore, solid electrolyte sheets without a support have also been proposed. For example, Non-Patent Literature 1 describes that a slurry obtained by dispersing a solid electrolyte powder represented by the composition formula Li₆PS₅Cl together with a binder in a solvent was applied to a polytetrafluoroethylene film, and the resulting coating film was dried and further densified at 300 MPa to produce a solid electrolyte sheet having a thickness of 90 µm to 120 µm.

### Citation List

### Patent Literature

Patent Literature 1: JP 2018-129307A

### Non-Patent Literature

Non-Patent Literature 1: J. Energy Storage, 66 (2023) 107480

### Summary of Invention

However, a solid electrolyte sheet without a support tends to have an increased thickness in order to ensure its self-supporting property. A solid electrolyte sheet with an increased thickness may exhibit a higher resistance, which can lead to reduced conductivity.

Therefore, an object of the present invention is to provide a solid electrolyte sheet in which a reduction in conductivity is suppressed.

The present invention provides a solid electrolyte sheet comprising:
a solid electrolyte; and
a binder,

wherein the solid electrolyte sheet has a thickness of 90 µm or less,
a content of the binder is more than 1 mass%,
the solid electrolyte contains a crystalline phase having an argyrodite-type crystal structure,
the solid electrolyte sheet does not include a porous support, and
the solid electrolyte sheet has self-supporting property.

### Description of Embodiments

The present invention relates to a solid electrolyte sheet. The solid electrolyte sheet of the present invention is composed of a sheet-like member containing a solid electrolyte. The term "sheet" as used herein refers to a member having a first main surface and a second main surface located on the opposite side thereof, and having a thickness, which is the distance between the two main surfaces, that is extremely small relative to the longitudinal dimension and the lateral dimension of the main surfaces (for example, the thickness is one-hundredth or less relative to the longitudinal dimension and the lateral dimension).

One of the features of the solid electrolyte sheet of the present invention is that it has self-supporting property despite not including a porous support. The term "self-supporting property" as used herein refers to the rigidity of the solid electrolyte sheet, and "having self-supporting property" means that the solid electrolyte sheet is capable of maintaining its sheet form by itself without the need for a support that is separate from the solid electrolyte sheet. For example, a test piece cut from the solid electrolyte sheet of the present invention into a square of 1 cm × 1 cm is prepared, and when the test piece is suspended by gripping adjacent corner portions (for example, within rectangular regions measuring 3 mm × 3 mm), if the test piece does not break under its own weight, it can be said that the solid electrolyte sheet has self-supporting property.

Examples of the porous support include those known in the art. For example, woven fabrics and nonwoven fabrics made of natural fibers or synthetic fibers, porous films made of synthetic resins, and glass fiber fabrics can be mentioned.

In order for the solid electrolyte sheet of the present invention to have self-supporting property, the solid electrolyte sheet has one of its features in its composition. Specifically, it is preferable that the solid electrolyte sheet of the present invention contains a solid electrolyte and a binder, and that the content of the binder relative to the solid electrolyte sheet is more than 1 mass%. By containing the binder at such a content, the solid electrolyte sheet of the present invention can maintain its own form despite not including a porous support. The content of the binder may be, for example, 2 mass% or more, 3 mass% or more, 4 mass% or more, or 5 mass% or more.

On the other hand, from the viewpoint of maintaining the conductivity of the solid electrolyte sheet at a high level, the content of the binder in the solid electrolyte sheet of the present invention is, for example, preferably 20 mass% or less, more preferably 15 mass% or less, and even more preferably 10 mass% or less.

As the binder contained in the solid electrolyte sheet of the present invention, one that has the function of binding solid electrolyte particles to each other and does not affect a reduction in the conductivity of the solid electrolyte sheet is preferably used. Examples of the binder include polymer compounds obtained using at least one polymerizable monomer selected from isobutene, styrene, butadiene, ethylene, propylene, methyl methacrylate, acrylonitrile, vinylidene chloride, and vinylidene fluoride. These polymerizable monomers may have a part or all of the hydrogen contained therein fluorinated.

Specific examples of the binder include polyisobutene, styrene-butadiene rubber, styrene-butadiene-styrene rubber, styrene-ethylene-butadiene-styrene rubber, polymethyl methacrylate, poly(acrylonitrile-butadiene), hydrogenated poly(acrylonitrile-butadiene), polyvinylidene fluoride, and the like.

One of these various binders may be used alone, or two or more thereof may be used in combination.

Furthermore, these various binders may have a part or all of the hydrogen contained therein fluorinated.

It is particularly preferable to use a fluorine-containing polymer compound as the binder because, despite its small amount of use, sufficient self-supporting property can be imparted to the solid electrolyte sheet, and the conductive property of the solid electrolyte sheet can be maintained at a high level. In particular, it is preferable to use, as the binder, a polymer compound containing fluorine atoms in its main chain. Examples of such binders include polyvinylidene fluoride, copolymers of vinylidene fluoride with fluorinated or non-fluorinated polyolefins, and the like.

From the viewpoint of achieving a favorable battery energy density, it is desirable that the solid electrolyte sheet of the present invention has a small thickness, provided that it has self-supporting property. From this viewpoint, the thickness of the solid electrolyte sheet of the present invention is, for example, preferably 90 µm or less, more preferably 70 µm or less, and even more preferably 50 µm or less.

Furthermore, from the viewpoint of maintaining the self-supporting property, it is preferable that the solid electrolyte sheet of the present invention has a thickness of, for example, 5 µm or more, preferably 10 µm or more, more preferably 20 µm or more, and even more preferably 30 µm or more.

The thickness of the solid electrolyte sheet can be measured by observing a cross section of the solid electrolyte sheet under a microscope. Alternatively, the thickness can be measured by using a thickness gauge. Regardless of the measurement method employed, the thickness is measured at ten or more different locations, and the arithmetic mean value of the measured values is taken as the thickness of the solid electrolyte sheet.

From the viewpoint of maintaining the conductivity of the solid electrolyte sheet at a high level, the content of the solid electrolyte in the solid electrolyte sheet of the present invention is, for example, preferably 80 mass% or more, more preferably 85 mass% or more, and even more preferably 90 mass% or more.

Furthermore, from viewpoint of enhancing the self-supporting property by adding the binder, the content of the solid electrolyte in the solid electrolyte sheet of the present invention is, for example, preferably less than 97 mass%, more preferably 95 mass% or less, and even more preferably 93 mass% or less.

The solid electrolyte sheet of the present invention may have a density of, for example, 1.0 g/cm³ or more, 1.3 g/cm³ or more, or 1.5 g/cm³ or more.

Furthermore, the solid electrolyte sheet of the present invention may have a density of, for example, 2.0 g/cm³ or less, 1.9 g/cm³ or less, or 1.8 g/cm³ or less.

By having such a density, the solid electrolyte sheet of the present invention provides a margin that permits a compression step to be carried out on the solid electrolyte sheet during a subsequent process following its production, for example, during a production process of a solid-state battery. This is advantageous from the viewpoint of producing a high-performance solid-state battery.

From the viewpoint of enhancing the self-supporting property, the solid electrolyte sheet of the present invention has a basis weight of, for example, preferably 30 g/m² or more, more preferably 35 g/m² or more, and even more preferably 40 g/m² or more. Furthermore, from the viewpoint of maintaining the conductivity of the solid electrolyte sheet at a high level, the basis weight of the solid electrolyte sheet of the present invention is, for example, preferably 70 g/m² or less, more preferably 65 g/m² or less, and even more preferably 60 g/m² or less.

The term "basis weight" as used herein refers to the mass per unit area of the solid electrolyte sheet. Accordingly, when two solid electrolyte sheets are made of the same material and have the same thickness but differ in density (apparent density), the sheet having the higher density will have a higher basis weight.

The basis weight of the solid electrolyte sheet can be controlled by adjusting the thickness of a coating film in a method for producing the solid electrolyte sheet, which will be described later.

The solid electrolyte sheet of the present invention, which has sufficient self-supporting property, has strength that is sufficient to withstand use. In the present invention, it is possible to ensure that the strength of the solid electrolyte sheet falls within a predetermined range, despite the absence of a support. Specifically, the solid electrolyte sheet of the present invention has a tensile strength of, for example, preferably 2.0 N/mm² or more, more preferably 4.0 N/mm² or more, even more preferably 5.0 N/mm² or more, and yet even more preferably 5.5 N/mm² or more. On the other hand, the tensile strength of the solid electrolyte sheet may be 20.0 N/mm² or less or 15.0 N/mm² or less. Here, the term "tensile strength" refers to the breaking strength measured by first preparing a No. 6 dumbbell-shaped test piece formed from the solid electrolyte sheet of the present invention and then conducting a tensile test on the test piece at a tensile speed of 20 mm/min.

In order to set the strength of the solid electrolyte sheet to the aforementioned value or higher, it is sufficient to appropriately control, for example, the type and content of the binder in the solid electrolyte sheet, the compression conditions during production of the solid electrolyte sheet, the particle size of the solid electrolyte particles, and the like.

The solid electrolyte contained in the solid electrolyte sheet of the present invention may be, for example, in the form of particles. When the solid electrolyte is in the form of particles, the particle size, expressed as the volume-based cumulative particle size D₅₀ at a cumulative volume of 50 vol% as measured using a laser diffraction/scattering particle size distribution measurement method, is, for example, preferably 20 µm or less, more preferably 10 µm or less, even more preferably 7 µm or less, and yet even more preferably 5 µm or less, from the viewpoint of enhancing the self-supporting property of the solid electrolyte sheet. On the other hand, the D₅₀ may be, for example, 0.1 µm or more, 0.3 µm or more, or 0.5 µm or more.

The solid electrolyte contained in the solid electrolyte sheet of the present invention is preferably a substance having lithium-ion conductive property. Examples of such solid electrolytes include inorganic solid electrolytes such as sulfide solid electrolytes, oxide solid electrolytes, nitride solid electrolytes, and halide solid electrolytes, and organic polymer electrolytes such as polymer electrolytes. From the viewpoint of making the effects of the present invention more pronounced, it is preferable that the solid electrolyte is a sulfide solid electrolyte.

As the sulfide solid electrolyte, those conventionally known can be used without any particular limitation. The sulfide solid electrolyte may, for example, contain Li and S and have lithium-ion conductive property.

The sulfide solid electrolyte may be a crystalline material, a glass-ceramic, or glass. Examples of such sulfide solid electrolytes include compounds represented by Li₂S-P₂S₅, Li₂S-P₂S₅-LiX (where "X" represents one or more halogen elements), Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and LiₐPS_{b}X_{c} (where "X" represents one or more halogen elements; a represents a number of 3.0 or more and 9.0 or less; b represents a number of 3.5 or more and 6.0 or less; and c represents a number of 0.1 or more and 3.0 or less). In addition, examples include sulfide solid electrolytes described in WO 2013/099834 and WO 2015/001818.

In particular, it is preferable that the solid electrolyte contains a crystalline phase having an argyrodite-type crystal structure, from the viewpoint of maintaining the conductivity of the solid electrolyte sheet at an even higher level.

The argyrodite-type crystal structure refers to a crystal structure possessed by a group of compounds derived from a mineral represented by the chemical formula Ag₈GeS₆. Whether or not a solid electrolyte has a crystalline phase with an argyrodite-type crystal structure can be confirmed by measurement using X-ray diffraction (hereinafter also referred to as "XRD") or the like. For example, in a diffraction pattern measured by XRD using CuKα1 radiation, the crystalline phase with an argyrodite-type crystal structure exhibits characteristic diffraction peaks at positions of 2θ = 25.5° ± 1.0°, 30.0° ± 1.0°, and 30.9° ± 1.0°. Furthermore, depending on the element species constituting the solid electrolyte, the crystalline phase may exhibit, in addition to the aforementioned diffraction peaks, characteristic diffraction peaks at positions of 2θ = 15.3° ± 1.0°, 18.0° ± 1.0°, 44.3° ± 1.0°, 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°. For identification of diffraction peaks derived from the argyrodite-type crystal structure, data such as PDF No. 00-034-0688, for example, may be used.

It is preferable that the solid electrolyte has a Young's modulus of 30 GPa or less. This is because, when pressing is performed in the process of producing a solid electrolyte sheet, the solid electrolyte particles are more likely to be crushed, thereby enabling densification of the solid electrolyte sheet and hence making it possible to enhance the self-supporting property of the solid electrolyte sheet. From the viewpoint of making this advantage more pronounced, the Young's modulus of the solid electrolyte is preferably 28 GPa or less and more preferably 25 GPa or less.

Furthermore, the Young's modulus of the solid electrolyte may be 1 GPa or more, 5 GPa or more, or 10 GPa or more.

The Young's modulus of the solid electrolyte can be controlled by adjusting the composition of the solid electrolyte and the conditions (for example, the firing temperature and firing atmosphere) for producing the solid electrolyte.

The Young's modulus of the solid electrolyte is measured, for example, using a method described in WO 2019/9228, which relates to an earlier application by the present applicant.

The solid electrolyte used in the present invention preferably contains at least a lithium (Li) element, a phosphorus (P) element, and a sulfur (S) element, and more preferably contains at least a lithium (Li) element, a phosphorus (P) element, a sulfur (S) element, and a halogen (X) element. In this case, it is preferable from the viewpoint of improving lithium-ion conductive property that the solid electrolyte is represented by the composition formula (I): LiₐPS_{b}X_{c} (where X represents at least one of a fluorine (F) element, a chlorine (Cl) element, a bromine (Br) element, and an iodine (I) element).

In the composition formula (I), a, which indicates the mole ratio of the Li element, is, for example, preferably 3.0 or more, more preferably 4.0 or more, and particularly preferably 5.0 or more. On the other hand, a is, for example, preferably 6.5 or less, more preferably 5.9 or less, and particularly preferably 5.6 or less. When a is within this range, the cubic argyrodite-type crystal structure becomes more stable near room temperature (25°C), thereby allowing lithium ion vacancies to be sufficiently introduced into the structure and, as a result, making it possible to effectively enhance lithium-ion conductive property.

In the composition formula (I), b is, for example, preferably 3.5 or more, more preferably 4.0 or more, and particularly preferably 4.2 or more. On the other hand, b is, for example, preferably 5.5 or less, more preferably 4.9 or less, and particularly preferably 4.7 or less. When b is within the aforementioned range, the argyrodite-type crystal structure becomes more stable near room temperature (25°C), thereby effectively enhancing lithium-ion conductive property.

In the composition formula (I), c is, for example, preferably 0.1 or more, more preferably 1.1 or more, and particularly preferably 1.4 or more. On the other hand, c is, for example, preferably 2.5 or less, more preferably 2.0 or less, and particularly preferably 1.8 or less.

The solid electrolyte may also be represented by the composition formula (II): Li_{7-d}PS_{6-d}X_{d}. A composition represented by the composition formula (II) is the stoichiometric composition of an argyrodite-type crystalline phase. In the composition formula (II), X is as defined in the composition formula (I).

In the composition formula (II), d is, for example, preferably 0.4 or more, more preferably 0.8 or more, and particularly preferably 1.2 or more. On the other hand, d is, for example, preferably 2.2 or less, more preferably 2.0 or less, and particularly preferably 1.8 or less.

The solid electrolyte may also be represented by the composition formula (III): Li_{7-d-2e}PS_{6-d-e}X_{d}. An argyrodite-type crystalline phase having a composition represented by the composition formula (III) is generated by, for example, a reaction between an argyrodite-type crystalline phase having a composition represented by the composition formula (II) and P₂S₅ (phosphorus pentasulfide).

In the composition formula (III), e is a value that indicates the deviation of the Li₂S component from the stoichiometric composition represented by the composition formula (II). For example, e is preferably -0.9 or more, more preferably -0.6 or more, and particularly preferably -0.3 or more. On the other hand, e is, for example, preferably (-d+2) or less, more preferably (-d+1.6) or less, and particularly preferably (-d+1.0) or less.

In the solid electrolyte, the atomic ratio X/P of the X element to the P element is, for example, preferably more than 1.0, more preferably 1.1 or more, even more preferably 1.2 or more, and yet even more preferably 1.4 or more. On the other hand, the atomic ratio X/P is, for example, preferably 2.5 or less, more preferably 2.3 or less, and even more preferably 2.2 or less. When the atomic ratio X/P is within the aforementioned range, lithium-ion conductive property is further improved. The atomic ratio X/P can be measured by, for example, high-frequency inductively coupled plasma optical emission spectroscopy (ICP emission spectroscopy) or SEM-EDS analysis.

In particular, when the X element contains at least the Cl element and the Br element, the atomic ratio (Cl+Br)/P of the total of the Cl element and the Br element to the P element is, for example, preferably more than 1.0, more preferably 1.1 or more, even more preferably 1.2 or more, and yet even more preferably 1.4 or more. On the other hand, the atomic ratio (Cl+Br)/P is, for example, preferably 2.5 or less, more preferably 2.3 or less, and even more preferably 2.0 or less. When the atomic ratio (Cl+Br)/P is within the aforementioned range, lithium-ion conductive property is advantageously improved even further. The atomic ratio (Cl+Br)/P can be measured, for example, by high-frequency inductively coupled plasma optical emission spectroscopy (ICP emission spectroscopy) or by elemental analysis using a scanning electron microscope with EDS (SEM-EDS).

It is particularly preferable that, among the above-described composition formulae (I) to (III), the solid electrolyte used in the present invention is represented by the composition formula (IV): Li_{7-d}PS_{6-d}Cl_{d1}Br_{d2}.

In the composition formula (IV), the total mole ratio d (= d1 + d2) of Cl and Br is, for example, preferably more than 1.0, more preferably 1.2 or more, and particularly preferably 1.4 or more. On the other hand, the total mole ratio d is, for example, preferably less than 2.5, more preferably less than 2.0, particularly preferably 1.8 or less, and even more preferably 1.7 or less. When the total mole ratio d is within the aforementioned range, the generation of a heterogeneous phase can be sufficiently controlled, and a reduction in lithium-ion conductivity can be effectively suppressed.

In the composition formula (IV), the ratio (d2/d1) of the mole ratio of Br to the mole ratio of Cl is, for example, preferably 0.1, more preferably 0.3 or more, and particularly preferably 0.5 or more. On the other hand, the ratio between these mole ratios is, for example, preferably 10 or less, more preferably 5 or less, and particularly preferably 3 or less. When the ratio between these mole ratios is within the aforementioned range, lithium-ion conductive property can be further enhanced.

In the composition formula (IV) above, d1, which indicates the mole ratio of Cl, is, for example, preferably 0.3 or more, more preferably 0.4 or more, and particularly preferably 0.6 or more. On the other hand, d1 is, for example, preferably 1.5 or less, more preferably 1.2 or less, and particularly preferably 1.0 or less. When d1 is not less than the aforementioned lower limit value, lithium-ion conductive property can be further enhanced. On the other hand, when d1 is not more than the aforementioned upper limit value, it is easy to obtain the solid electrolyte.

In the composition formula (IV) above, d2, which indicates the mole ratio of Br, is, for example, preferably 0.3 or more, more preferably 0.4 or more, and particularly preferably 0.6 or more. On the other hand, d2 is, for example, preferably 1.5 or less, more preferably 1.2 or less, and particularly preferably 1.0 or less. When d2 is not less than the aforementioned lower limit value, it is easy to obtain the solid electrolyte. On the other hand, when d2 is not more than the aforementioned upper limit value, lithium-ion conductive property can be further enhanced.

It is preferable that, regardless of whether the solid electrolyte used in the present invention is represented by the above composition formula (I), (II), (III), or (IV), the X element contains the Br element, since this further improves lithium-ion conductive property.

The solid electrolyte sheet of the present invention may be composed only of a solid electrolyte and a binder, or may contain, in addition to the solid electrolyte and the binder, other components. Examples of such other components include a dispersant.

The content of the other components in the solid electrolyte sheet of the present invention, expressed as the total amount of all such other components, may be, for example, 7.0 mass% or less, 3.0 mass% or less, or 1.0 mass% or less.

Next, a preferred method for producing the solid electrolyte sheet of the present invention will be described.

The solid electrolyte sheet of the present invention is preferably produced using a method including the steps (a) to (e) below:
(a) preparing a slurry containing a solid electrolyte, a binder, and a volatile liquid medium;
(b) applying the slurry onto a base sheet to form a coating film;
(c) removing the volatile liquid medium from the coating film;
(d) pressing the coating film to obtain a solid electrolyte sheet; and
(e) peeling the solid electrolyte sheet from the base sheet.

Each step will be described below.

In the step (a), a slurry is prepared by mixing the solid electrolyte particles and binder described above with a volatile liquid medium. Examples of the volatile liquid medium include nonpolar solvents such as heptane, methylcyclohexane, and toluene; aprotic polar solvents such as methyl isobutyl ketone and cyclohexanone; mixtures thereof; and the like.

As methods for mixing the solid electrolyte particles, the binder, and the volatile liquid medium, examples include an ultrasonic homogenizer, a shaker, a thin-film spin mixer, a dissolver, a homomixer, a kneader, a roll mill, a sand mill, an attritor, a ball mill, a vibrator mill, a high-speed impeller mill, and the like.

The proportion of the volatile liquid medium contained in the slurry is, for example, preferably 20 mass% or more, more preferably 40 mass% or more, and even more preferably 50 mass % or more, from the viewpoint of successfully forming a coating film from the slurry. Furthermore, the proportion of the volatile liquid medium contained in the slurry is, for example, preferably 90 mass% or less, more preferably 80 mass% or less, and even more preferably 70 mass% or less, from the viewpoint of efficiently removing the volatile liquid medium from the coating film formed from the slurry.

In the step (b), the slurry is applied onto a base sheet to form a coating film. As methods for applying the slurry, examples include doctor blade coating, die coating, gravure coating, spray coating, electrostatic coating, bar coating, and the like. By adjusting the amount of slurry applied, the thickness of the solid electrolyte sheet ultimately obtained can be controlled.

As the base sheet onto which the slurry is applied, for example, films, fabrics, foils, or the like made of resin, metal, or glass may be used.

When the base sheet is made of, for example, a resin, examples of resins that may be used include acrylic resin, polyester resin, cellulose derivative resin, polyvinyl acetal resin, polyvinyl butyral resin, vinyl chloride-vinyl acetate copolymer, chlorinated polyolefin, and copolymers of these resins.

When the base sheet is made of, for example, a metal, examples of metals that may be used include copper, stainless steel, aluminum, nickel, silver, gold, chromium, cobalt, tin, zinc, brass, and alloys of these metals.

In the step (c), the volatile liquid medium is removed from the coating film. As methods for removing the volatile liquid medium, examples include warm air drying, hot air drying, infrared drying, drying under a reduced pressure, drying through dielectric heating, and the like. The degree of removal of the volatile liquid medium may be such that the content of the volatile liquid medium remaining in the coating film after removal is, for example, 10 mass% or less, 7 mass% or less, or 5 mass% or less.

In the step (d), the coating film after the removal of the volatile liquid medium is pressed. Thus, a desired solid electrolyte sheet is obtained. For example, the coating film may be pressed in its thickness direction using a uniaxial press machine. Alternatively, the entire coating film may be isotropically pressed by CIP (cold isotropic pressing).

Regardless of the method employed, the pressing pressure is, for example, preferably 200 MPa or more, more preferably 400 MPa or more, and even more preferably 600 MPa or more, from the viewpoint of obtaining a solid electrolyte sheet having a high degree of self-supporting property. Although there is no particular limitation on the upper limit of the pressing pressure, applying a high pressure of about 1500 MPa makes it possible to easily obtain a solid electrolyte sheet having a sufficiently high degree of self-supporting property.

The pressing may be performed under heating. This further enhances the self-supporting property of the solid electrolyte sheet. From this viewpoint, the heating temperature may be, for example, 0°C or higher, 10°C or higher, or 20°C or higher. Furthermore, from the viewpoint of suppressing degradation of the binder, the heating temperature may be, for example, 200°C or lower, 100°C or lower, or 50°C or lower.

Once a desired solid electrolyte sheet has been obtained in this manner, the solid electrolyte sheet is peeled from the base sheet. Since the solid electrolyte sheet after peeling has a sufficiently high degree of self-supporting property, it can be handled independently.

On the respective surfaces of the solid electrolyte sheet obtained in this manner, a positive electrode in which a positive electrode layer is formed on a current collector and a negative electrode in which a negative electrode layer is formed on a current collector are disposed. These three members are pressed together and then hermetically sealed within a battery can to obtain a solid-state battery.

The positive electrode layer contains a positive electrode active material. Examples of the positive electrode active material include oxide active materials containing lithium-transition metals. Specific examples include layered rock salt-type active materials such as lithium cobalt oxide (LiCoO₂), lithium nickel oxide (LiNiO₂), and LiNi_{1/3}Co_{1/3}Mn_{1/3}O₂; spinel-type active materials such as lithium manganese oxide (LiMn₂O₄), Li(Ni_{0.5}Mn_{1.5})O₄, and Li₁₊ₓMn_{2-x-y}M_{y}O₄ (where M represents one or more selected from the group consisting of Al, Mg, Co, Fe, Ni, and Zn); and olivine-type active materials such as lithium titanate (LiₓTiO_{y}), LiFePO₄, LiMnPO₄, LiCoPO₄, and LiNiPO₄.

On the other hand, the negative electrode layer contains a negative electrode active material. Examples of the negative electrode active material include materials capable of storing lithium, such as graphite and silicon.

With regard to the embodiments described above, the present invention discloses the following solid electrolyte sheets.
[1] A solid electrolyte sheet comprising:
   a solid electrolyte; and
   a binder,

   wherein the solid electrolyte sheet has a thickness of 90 µm or less,
   a content of the binder is more than 1 mass%,
   the solid electrolyte contains a crystalline phase having an argyrodite-type crystal structure,
   the solid electrolyte sheet does not include a porous support, and
   the solid electrolyte sheet has self-supporting property.
[2] The solid electrolyte sheet as set forth in clause [1], wherein the content of the binder is 20 mass% or less.
[3] The solid electrolyte sheet as set forth in clause [1] or [2], which has a tensile strength of 2.0 N/mm² or more.
[4] The solid electrolyte sheet as set forth in any one of clauses [1] to [3], which has a density of 1.0 g/cm³ or more and 2.0 g/cm³ or less.
[5] The solid electrolyte sheet as set forth in any one of clauses [1] to [4], wherein the solid electrolyte has a Young's modulus of 30 GPa or less.
[6] The solid electrolyte sheet as set forth in any one of clauses [1] to [5], wherein the solid electrolyte has a volume-based cumulative particle size D₅₀ at a cumulative volume of 50 vol% of 0.1 µm or more and 20 µm or less, the volume-based cumulative particle size D₅₀ being measured using a laser diffraction/scattering particle size distribution measurement method.
[7] The solid electrolyte sheet as set forth in any one of clauses [1] to [6], wherein the binder is a fluorine-containing polymer compound.

### Examples

Hereinafter, the present invention will be described in greater detail using examples. However, the scope of the present invention is not limited to the examples below. Unless otherwise specified, "%" means "mass%".

### Example 1

As the solid electrolyte, a powder of a lithium-ion conductive sulfide was prepared, the sulfide being represented by the composition formula Li_{5.4}PS_{4.4}Cl_{0.8}Br_{0.8} and containing a crystalline phase having an argyrodite-type crystal structure. The powder had a particle size D₅₀ of 3.4 µm.

As the binder, a fluorine-containing polymer compound polymerized using at least vinylidene fluoride as a polymerizable monomer was used.

The solid electrolyte and the binder were used in such amounts that the solid electrolyte accounted for 95% and the binder accounted for 5% of the total mass of the two.

Butyl butyrate was used as the volatile liquid medium. Butyl butyrate was mixed with the solid electrolyte and the binder to obtain a slurry. The proportion of the volatile liquid medium in the slurry was 47%.

The slurry was applied onto a base sheet made of polyethylene terephthalate (PET) and having a thickness of 38 µm using a doctor blade with a gap of 70 µm to form a coating film. The coating film was vacuum-dried at 120°C.

The coating film was pressed at a pressure of 700 MPa using a CIP (manufactured by Kobe Steel, Ltd.). After pressing, the coating film was peeled from the base sheet to obtain a solid electrolyte sheet.

### Example 2

The solid electrolyte and the binder were used in such amounts that the solid electrolyte accounted for 93% and the binder accounted for 7% of the total mass of the two. A solid electrolyte sheet was obtained in the same manner as in Example 1, except for the above-described difference.

### Example 3

The solid electrolyte and the binder were used in such amounts that the solid electrolyte accounted for 90% and the binder accounted for 10% of the total mass of the two. A solid electrolyte sheet was obtained in the same manner as in Example 1, except for the above-described difference.

### Example 4

The solid electrolyte and the binder were used in such amounts that the solid electrolyte accounted for 80% and the binder accounted for 20% of the total mass of the two. A solid electrolyte sheet was obtained in the same manner as in Example 1, except for the above-described difference.

### Comparative Example 1

The solid electrolyte and the binder were used in such amounts that the solid electrolyte accounted for 99% and the binder accounted for 1% of the total mass of the two. A solid electrolyte sheet was obtained in the same manner as in Example 1, except for the above-described difference.

### Comparative Example 2

This comparative example represents an example in which a solid electrolyte sheet including a porous support was produced.

The solid electrolyte and the binder were used in such amounts that the solid electrolyte accounted for 99% and the binder accounted for 1% of the total mass of the two. A slurry was obtained in the same manner as in Example 1, except for the above-described difference.

The obtained slurry was used to form a coating film on a base sheet, and the coating film was then dried, in the same manner as in Example 1.

A support made of a nonwoven fabric having a thickness of 21 µm was sandwiched between a pair of the coating films to obtain a laminate. This laminate was pressed using the same method as in Example 1, and then the base sheet was peeled off to obtain a solid electrolyte sheet.

### Comparative Example 3

This comparative example represents another example in which a solid electrolyte sheet including a porous support was produced.

The solid electrolyte and the binder were used in such amounts that the solid electrolyte accounted for 95% and the binder accounted for 5% of the total mass of the two. A solid electrolyte sheet was obtained in the same manner as in Comparative Example 2, except for the above-described difference.

### Comparative Example 4

This comparative example represents another example in which a solid electrolyte sheet including a porous support was produced.

The solid electrolyte and the binder were used in such amounts that the solid electrolyte accounted for 80% and the binder accounted for 20% of the total mass of the two. A solid electrolyte sheet was obtained in the same manner as in Comparative Example 2, except for the above-described difference.

### Evaluation

For the solid electrolyte sheets obtained in the examples and the comparative examples, the thickness, tensile strength, and density were measured using the above-described methods. Furthermore, the ion conductivity was measured using the following method, and the self-supporting property was also evaluated. Table 1 below shows the results. The tensile strength was measured using a compact table-top tensile tester (EZ-SX 5000N manufactured by Shimadzu Corporation).

### Measurement of Ion Conductivity

For the solid electrolyte sheets obtained in the examples and the comparative examples, the lithium-ion conductivity was measured using a high-performance electrochemical measurement system VSP-300 from BioLogic Science Instruments SAS. The measurement conditions were as follows: an AC impedance method, a temperature of 25°C, a frequency range of 100 MHz to 7 MHz, and an amplitude of 100 mV.

### Evaluation of self-supporting property

The self-supporting property of the solid electrolyte sheets obtained in the examples and the comparative examples was evaluated based on whether the solid electrolyte sheets had sufficient strength to allow handling and transfer operations when lifted with tweezers. Specifically, evaluation was performed as follows:
A: No cracks or fractures occurred to an extent that would render the sheet unusable as a solid electrolyte sheet.
B: Cracks or fractures occurred to an extent that would render the sheet unusable as a solid electrolyte sheet.

**[Table 1]**

| | Content in solid electrolyte sheet (%) | | Thickness (µm) | Support | Tensile strength (N/mm²) | Density (g/cm²) | Ion conductivity (mS/cm) | Self-supporting property |
|---|---|---|---|---|---|---|---|---|
| | Solid electrolyte | Binder | | | | | | |
| Ex. 1 | 95 | 5 | 38 | Absent | 2.4 | 1.54 | 0.97 | A |
| Ex. 2 | 93 | 7 | 40 | Absent | 5.6 | 1.66 | 0.57 | A |
| Ex. 3 | 90 | 10 | 38 | Absent | 5.1 | 1.64 | 0.19 | A |
| Ex. 4 | 80 | 20 | 36 | Absent | 4.2 | 1.72 | 0.14 | A |
| Com. Ex. 1 | 99 | 1 | - | Absent | - | - | Not measurable | B |
| Com. Ex. 2 | 99 | 1 | 87 | Present | 5.1 | 1.43 | 0.50 | A |
| Com. Ex. 3 | 95 | 5 | 46 | Present | 20.0 | 1.27 | 0.05 | A |
| Com. Ex. 4 | 80 | 20 | 56 | Present | 21.2 | 1.25 | 0.05 | A |

As is apparent from the results shown in Table 1, the solid electrolyte sheets obtained in the examples exhibited a high degree of self-supporting property despite not including a support, and also exhibited a high degree of ion conductive property.

In contrast, the solid electrolyte sheet of Comparative Example 1 exhibited insufficient self-supporting property due to a low binder content. Therefore, the ion conductivity could not be measured.

The solid electrolyte sheets of Comparative Examples 2 and 3 exhibited sufficient self-supporting property because they included a support; however, their ion conductive property was reduced due to the presence of the support.

### Industrial Applicability

According to the present invention, there is provided a solid electrolyte sheet that has self-supporting property despite not including a support and that suppresses an increase in thickness.

## Claims

1. A solid electrolyte sheet comprising:
a solid electrolyte; and
a binder,
wherein the solid electrolyte sheet has a thickness of 90 µm or less,
a content of the binder is more than 1 mass%,
the solid electrolyte contains a crystalline phase having an argyrodite-type crystal structure,
the solid electrolyte sheet does not include a porous support, and
the solid electrolyte sheet has self-supporting property.

2. The solid electrolyte sheet according to claim 1, wherein the content of the binder is 20 mass% or less.

3. The solid electrolyte sheet according to claim 1 or 2, which has a tensile strength of 2.0 N/mm² or more.

4. The solid electrolyte sheet according to claim 1 or 2, which has a density of 1.0 g/cm³ or more and 2.0 g/cm³ or less.

5. The solid electrolyte sheet according to claim 1 or 2, wherein the solid electrolyte has a Young's modulus of 30 GPa or less.

6. The solid electrolyte sheet according to claim 1 or 2, wherein the solid electrolyte has a volume-based cumulative particle size D₅₀ at a cumulative volume of 50 vol% of 0.1 µm or more and 20 µm or less, the volume-based cumulative particle size D₅₀ being measured using a laser diffraction/scattering particle size distribution measurement method.

7. The solid electrolyte sheet according to claim 1 or 2, wherein the binder is a fluorine-containing polymer compound.
